(19) **Europäisches Patentamt**
**European Patent Office**
**Office européen des brevets**

(11) **EP 3 394 977 B1**

(12) **EUROPÄISCHE PATENTSCHRIFT**

(45) Veröffentlichungstag und Bekanntmachung des Hinweises auf die Patenterteilung:
**16.04.2025  Patentblatt 2025/16**

(21) Anmeldenummer: **16798524.1**

(22) Anmeldetag: **22.11.2016**

(51) Internationale Patentklassifikation (IPC):
**H02P 1/48** *(2006.01)*      **H02P 1/50** *(2006.01)*

(52) Gemeinsame Patentklassifikation (CPC):
**H02P 1/48; H02P 1/50**

(86) Internationale Anmeldenummer:
**PCT/EP2016/078402**

(87) Internationale Veröffentlichungsnummer:
**WO 2017/108301 (29.06.2017 Gazette 2017/26)**

(54) **PM-LINE-START MOTOR UND EINSCHALTVERFAHREN FÜR DIESEN**

PM LINE-START MOTOR AND SWITCH-ON METHOD THEREFOR

MOTEUR À DÉMARRAGE DIRECT À AIMANT PERMANENT ET SON PROCÉDÉ DE MISE SOUS TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015  DE 102015226210**

(43) Veröffentlichungstag der Anmeldung:
**31.10.2018  Patentblatt 2018/44**

(73) Patentinhaber: **KSB SE & Co. KGaA**
**67227 Frankenthal (DE)**

(72) Erfinder:
• **HUTH, Gerhard**
**97618 Hohenroth Leutershausen (DE)**
• **SCHIRMER, Hans-Georg**
**55234 Offenheim (DE)**

(74) Vertreter: **von Tietzen und Hennig, Nikolaus**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**CH-A- 435 435      US-A- 5 859 513**

• **ALIAKBAR DAMAKI ALIABAD ET AL: "Line-Start Permanent-Magnet Motors: Significant Improvements in Starting Torque, Synchronization, and Steady-State Performance", IEEE TRANSACTIONS ON MAGNETICS, IEEE SERVICE CENTER, NEW YORK, NY, US, vol. 46, no. 12, 1 December 2010 (2010-12-01), pages 4066 - 4072, XP011336722, ISSN: 0018-9464, DOI: 10.1109/ TMAG.2010.2070876**
• **ALIABAD A D ET AL: "Analytic modelling and dynamic analysis of pole-changing line-start permanent-magnet motors", IET ELECTRIC POWER APPLICATIONS, IET, UK, vol. 6, no. 3, 8 March 2012 (2012-03-08), pages 149 - 155, XP006041293, ISSN: 1751-8660, DOI: 10.1049/ IET-EPA.2011.0146**

**Beschreibung**

Die vorliegende Erfindung betrifft einen Permanentmagnet-erregten-Line-Start Motor, nachfolgend auch als PM-Line-Start Motor bezeichnet, und ein Einschaltverfahren für diesen.

Der Permanent-Magnet-Line-Start Motor (PM-Line-Start Motor), alternativ manchmal auch als Permanentmagnet erregter Line-Start Motor, Line-Start-Permanent-Magnet Motor oder als LSPM-Motor bezeichnet, ist ein Drehstrom-Asynchronmotor mit Kurzschlussläufer, der im Rotor zusätzliche Permanentmagneten enthält. Nach dem asynchronen Anlauf synchronisiert er sich auf die Speisefrequenz auf und läuft dann im Synchronbetrieb. Prinzip bedingt weist er minimale Läufer- und Erregerverluste auf, wodurch sich ein hoher Wirkungsgrad ergibt. Somit vereinigt er die Vorteile der robusten Asynchronmaschine mit denen des verlustarmen Synchronmotors.

Ein derartiger Motor besitzt die Fähigkeit eines Asynchronmotors ein asynchrones Anfahrmoment zu erzeugen sowie die Fähigkeit eines Synchronmotors mit einer zum Drehfeld synchronen Drehzahl laufen zu können.

Aus dem Literaturartikel ALIAKBAR DAMAKI ALIABAD ET AL: "Line-Start Permanent-Magnet Motors: Significant Improvements in Starting Torque, Synchronization, and Steady-State Performance", IEEE TRANSACTION ON MAGNETICS, IEEE SERVICE CENTER, NEW YORK, NY, US, Bd. 46, Nr. 12, 1. Dezember 2010 (2010-12-01), Seiten 4066-4072, ist ein Konzept bekannt, um das Anlaufmoment und die Synchronifikationsfähigkeit von Line-Start-Permanent-Magnet Motoren mit einer Polumschaltwicklung zu verbessern. Eine Umschaltung der Statorwicklungen wird mittels eines Zentrifugalschalters realisiert. Eine inhaltliche Fortsetzung ist aus dem Literaturartikel ALIABAD A D ET AL:"Analytic modelling and dynamic analysis of pole-changing line-start permanent-magnet motors, IET ELECTRIC POWER APPLICATION, IET, UK, Bd. 6, Nr. 3, 8. März 2012 (2012-03-08), Seiten 149-155 bekannt.

Die US 5,859,513 A offenbart eine Anlaufschaltung, die größere Pendelmomente beim Einschalten von PM-Line-Start Motoren nach dem Hochlauf beim Intrittfall vermeiden soll. Die CH 435 435 A offenbart ein Verfahren zum Selbstanlauf einer Synchronmaschine mit Dämpferwicklungskäfig und einer eine Polumschaltung ermöglichenden Ständerwicklung.

PM-Line-Start Motoren müssen ab einer Bemessungsleistung von etwa 4 bis 5 kW zur Reduzierung der Einschaltstöße in Netz und Wellenstrang mit einem passenden Einschaltverfahren ans Drehstromnetz geschaltet werden.

Die von den Käfigläufermotoren her bekannten Einschaltverfahren, wie zum Beispiel der Stern-Dreieck Anlauf, der Anlasstransformator oder der Softstarter, stellen Verfahren dar, die beim Einschalten zunächst die Motorspannung reduzieren. Diese Verfahren sind bei PM-Line-Start Motoren nicht sinnvoll einsetzbar. Der Grund hierfür liegt in der Physik des PM-Line-Start Motors.

PM-Line-Start Motoren stellen eine Kombination aus Käfigläufermotor und PM-Synchronmotor dar. Nach dem Einschalten läuft der PM-Line-Start Motor zunächst mit dem Anlaufkäfig wie ein Käfigläufermotor hoch. Nach dem Hochlaufvorgang folgt der finale Intrittfall auf die synchrone Drehzahl und der PM-Line-Start Motor läuft ab dann betriebsmäßig als PM-Synchronmotor mit einem entsprechend hohen Wirkungsgrad.

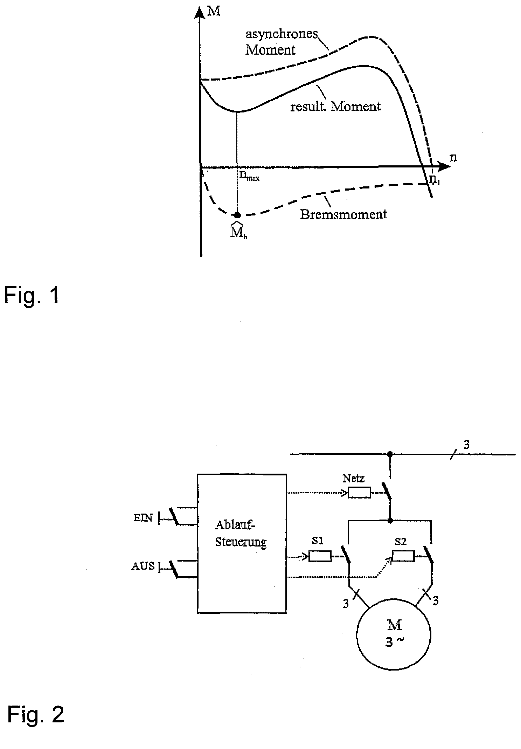

Beim asynchronen Hochlaufvorgang induziert der PM-Läufer ein schlupffrequentes Spannungssystem in die Ständerwicklung, für das das Drehstromnetz praktisch einen Kurzschluss darstellt. Hieraus resultiert, neben dem gewünschten asynchronen Drehmoment des Anlaufkäfigs, ein zusätzliches generatorisches Bremsmoment, das den Hochlaufvorgang grundsätzlich behindert. Die Überlagerung beider Drehmomentanteile ist in Fig. 1 skizziert.

Der Verlauf des generatorischen Bremsmoments weist einen ausgeprägten Bremssattel auf. Dieser generatorische Bremssattel, der in seiner Größenordnung nur sehr bedingt konstruktiv beeinflussbar und zudem nicht von der Netzspannung abhängig ist, stellt das eigentliche Problem beim Einschalt- und Hochlaufvorgang mit reduzierter Spannung dar.

Da das asynchrone Drehmoment quadratisch mit der reduzierten Spannung sinkt, der generatorische Bremssattel aber in seiner Höhe unverändert erhalten bleibt, kann der Hochlaufvorgang bei entsprechend reduzierter Spannung bereits am generatorischen Bremssattel enden. Das asynchrone Antriebsmoment mit reduzierter Spannung ist nicht groß genug, um den generatorischen Bremssattel zu überwinden. Daher führt dies unter Umständen zu einem untersynchronen Grenzzyklus (Schwankung um einen Drehzahlpunkt im untersynchronen Drehzahlbereich) des Motors in der Einschaltphase mit reduzierter Spannung. In der Praxis findet dieses Hängenbleiben am generatorischen Bremssattel bereits ab einer Spannungsreduzierung auf 80 bis 85% statt. Damit sind allein spannungsreduzierende Einschaltverfahren für PM-Line-Start Motoren unbrauchbar. Es stellt sich daher die Aufgabe wirkungsvoll einsetzbare Einschaltverfahren für PM-Line- Start Motoren zu entwickeln, die die vorgenannten Nachteile überwinden.

Bisher musste diese Aufgabe nicht gelöst werden, da PM-Line-Start Motoren, ganz entgegen ihrer Bezeichnung "Line-Start", zunächst speziell für den drehzahlveränderbaren Betrieb am U-f-Umrichter entwickelt wurden. Erst in den letzten Jahren wurde die Line-Start Funktionalität in Verbindung mit der Forderung nach Effizienzklassemotoren wiederentdeckt. Bisher am Markt befindliche PM-Line-Start Motoren decken aber nur den unteren Leistungsbereich bis etwa 5 kW ab. Für diesen Leistungsbereich werden aber noch keine Einschaltverfahren benötigt, so dass solche Motoren der vorstehend erläuterten Problematik nicht ausgesetzt sind.

Die vorliegende Erfindung löst dieses Problem mithilfe eines PM-Line-Start Motors, der die Merkmale des Anspruchs 1 aufweist.

Demnach umfasst der PM-Line-Start Motor, der vorzugsweise eine Leistung von mindestens 5 kW aufweist, einen Läufer und einen Ständer mit einer Ständerwicklung, wobei die Ständerwicklung als polumschaltbare Drehfeldwicklung ausgeführt ist.

Dadurch kann in einem Einschaltverfahren der dem Hochlauf des Motors hemmende generatorische Bremssattel vermieden werden.

Erfindungsgemäß umfasst die polumschaltbare Drehfeldwicklung eine erste Wicklungsstufe und eine zweite Wicklungsstufe, die getrennt voneinander betreibbar sind, wobei die erste Wicklungsstufe eine nachstehend als Anlaufpolpaarzahl $p_1$ bezeichnete Polpaarzahl besitzt, die ungleich einer nachstehend als Arbeitspolpaarzahl $p_2$ bezeichnete Polpaarzahl der zweiten Wicklungsstufe ist.

Typischerweise dient die erste Wicklungsstufe zum asynchronen Hochlaufen des Motors und die zweite Wicklungsstufe zum synchronen Betreiben des Motors. Dabei ist es von Vorteil, wenn die erste Wicklungsstufe so bemessen ist, dass sich kein generatorischer Bremssattel ausbilden kann.

Die Unterdrückung des generatorischen Bremssattels in der Anlaufphase ist möglich, wenn die erste Wicklungsstufe, die zum asynchronen Hochlaufen des Motors genutzt wird, eine Anlaufpolpaarzahl $p_1$ besitzt, die nicht mit der Polpaarzahl des PM-Läufers $p_3$ übereinstimmt. In der Anlaufphase arbeiten damit Ständerwicklung und Anlaufkäfig mit der Anlaufpolpaarzahl $p_1$ als reiner Asynchronmotor. Der PM-Läufer ist aufgrund der unterschiedlichen Polpaarzahlen entkoppelt. Durch diese Entkopplung wird das Ausbilden des generatorischen Bremssattels verhindert. Es kommt also nicht dazu, dass im Hochlaufvorgang der PM-Läufer ein dem Anlaufmoment entgegenwirkendes Bremsmoment erzeugt.

Nach dem Hochlauf wird auf die zweite Wicklungsstufe umgeschaltet, die vorzugsweise dieselbe Polpaarzahl $p_3$ des PM-Läufers aufweist. Daher ist die Arbeitspolpaarzahl $p_2$ der zweiten Wicklungsstufe in einer vorteilhaften Ausführung der Erfindung gleich der Polpaarzahl $p_3$ des PM-Läufers. Dem Fachmann ist klar, dass die zweite Wicklungsstufe für den synchronen Betrieb des PM-Line-Start Motors vorgesehen ist.

Nach einer weiteren vorteilhaften Modifikation der Erfindung ist die Anlaufpolpaarzahl $p_1$ der ersten Wicklungsstufe kleiner als die Arbeitspolpaarzahl $p_2$ der zweiten Wicklungsstufe. So können sich beispielsweise die Polpaarzahlen der ersten zur zweiten Wicklungsstufe der Ständerwicklung das Verhältnis 1:2 annehmen. Die schließt aber die Variation der Erfindung nicht aus, dass auch die Anlaufpolpaarzahl der ersten Wicklungsstufe $p_1$ größer als die Arbeitspolpaarzahl $p_2$ der zweiten Wicklung sein kann.

Erfindungsgemäß umfasst der Motor ferner eine Ablaufsteuerung, die dazu ausgelegt ist, während eines Einschaltvorgangs des Motors eine gezielte Wicklungsumschaltung der polumschaltbaren Drehfeldwicklung vorzunehmen. Dabei erfolgt eine gezielte Wicklungsumschaltung von der ersten Wicklungsstufe zum Hochlaufen des Motors auf die zweite Wicklungsstufe zum synchronen Betreiben des Motors.

Gemäß einer weiteren vorteilhaften Ausbildung der Erfindung ist die Ablaufsteuerung ferner dazu ausgelegt, zwischen dem Umschalten von der ersten Wicklungsstufe auf die zweite Wicklungsstufe eine Phase oder einen Zeitabschnitt vorzusehen, in der weder die erste noch die zweite Wicklungsstufe mit Energie versorgt sind, wobei vorzugsweise der Zeitpunkt des Umschaltens auf die zweite Wicklungsstufe in Abhängigkeit von der Phasenlage eine Netzspannung erfolgt.

Der Umschaltzeitpunkt hat einen maßgeblichen Einfluss auf einen Wiedereinschaltstromstoß, der bei Beachtung der Phasenlage einer Netzspannung bezüglich der induzierten Spannung (Polradspannung) auftreten kann.

Dabei kann der erfindungsgemäße Motor ferner einen ersten Schalter, der mit der ersten Wicklungsstufe verbunden ist, und einen zweiten Schalter, der mit der zweiten Wicklungsstufe verbunden ist, umfassen, um eine zwischen jeweiliger Wicklungsstufe und Netzspannungsleitung angeordnete Leitung wahlweise zu schließen oder zu unterbrechen. Vorzugsweise sind dabei der erste und der zweite Schalter durch eine Ablaufsteuerung betätigbar. Als Schalter bieten sich insbesondere Schütze an.

Nach einer optionalen Fortbildung der Erfindung sind die jeweiligen Enden des ersten und zweiten Schalters, die nicht mit der zugehörigen Wicklung verbunden sind, miteinander verbunden und über einen Netzschalter an eine Versorgungsleitung angeschlossen. Dabei ist auch der Netzschalter vorzugsweise durch die Ablaufsteuerung betätigbar ausgebildet.

Erfindungsgemäß umfasst der Motor eine Vorschaltung zum Reduzieren einer Spannung zwischen einer Netzspannungsleitung und der Ständerwicklung, um einen Einschaltstrom oder einen Wiedereinschaltstrom, der beispielsweise beim Umschalten von der ersten Wicklung zu der zweiten Wicklung auftreten kann, zu begrenzen. Dabei ist möglich, dass die Vorschaltung durch Vorschaltimpedanzen oder einen Softstarter verwirklicht ist.

Nach einem weiteren optionalen Merkmal ist die Ständerwicklung in Form einer Dahlanderwicklung ausgeführt.

Die Umsetzung der Ständerwicklung in Form einer Dahlanderwicklung ist von Vorteil, da eine bessere Aktivteilnutzung verwirklicht wird.

Als Alternative zur einstückigen Ausbildung der Ständerwicklung in Form einer Dahlanderwicklung kann die Ständerwicklung jedoch auch zwei voneinander getrennte Wicklungen aufweisen, die jeweils für unterschiedliche Polzahlen ausgelegt sind.

Nach einer vorteilhaften Ausführung der Erfindung ist der Motor dazu ausgelegt eine Umschaltung von der ersten Wicklung auf die zweite Wicklung mit Bezug auf die synchrone Bemessungsdrehzahl $n_1$ des PM-Line-Start Motors übersynchron auszuführen.

Dabei ist die Bemessungsdrehzahl $n_1$ das Verhältnis der Netzfrequenz $f_{Netz}$ durch die Arbeitspolpaarzahl $p_2$ der zweiten Wicklungsstufe.

Dadurch wird beim Umschalten von der ersten Wicklungsstufe auf die zweite Wicklungsstufe ein möglichst kleiner Wiedereinschaltstromstoß erhalten.

Ferner dazu betrifft die vorliegende Erfindung ein Einschaltverfahren eines PM-Line-Start Motors, der die Merkmale einer der vorstehend aufgeführten Ausführungsformen aufweist, wobei das Verfahren die Schritte umfasst:

(i) Einschalten einer ersten Wicklungsstufe zum Starten einer asynchronen Hochlaufphase,
(ii) Abschalten der ersten Wicklungsstufe, um die asynchrone Hochlaufphase zu beenden, und
(iii) Zuschalten der zweiten Wicklungsstufe, die zum synchronen Betreiben des Motors ausgelegt ist.

Erfindungsgemäß umfasst das vorstehende Einschaltverfahren ferner zwischen Schritt (ii) und (iii) den Schritt:
(iv) Überwachen der Netzspannung und einer induzierten Polradspannung, um einen Umschaltzeitpunkt zu ermitteln, der eine möglichst stoßfreie Netzaufschaltung zulässt, wobei vorzugsweise ein Umschaltzeitpunkt dann eine möglichst stoßfreie Netzaufschaltung zulässt, wenn zwischen der Polradspannung und der Netzspannung etwa Frequenzgleichheit herrscht und die Differenz zwischen Netzspannung und Frequenzgleichheit klein ist, also einen vorbestimmten Schwellenwert unterschreitet.

Die Erfindung und ihre Weiterbildungen werden nachstehend anhand der beiliegenden Zeichnungen bevorzugter Ausführungsbeispiele näher beschrieben. Es zeigen:

Fig. 1:   einen quasi-stationären Drehmomentverlauf beim asynchronen Hochlauf eines herkömmlichen PM-Line-Start Motors,

Fig. 2:   ein Strukturschaltbild eines beschalteten PM-Line-Start Motors,

Fig. 3:   eine Schaltfolge der in Fig. 2 abgebildeten Schalter während eines Hochlaufens des Motors,

Fig. 4:   ein M(n)-Diagramm eines Hochlaufvorgangs eines erfindungsgemäßen PM-Line-Start Motors mit Wicklungsumschaltung,

Fig. 5:   eine Beschaltungsvariante eines erfindungsgemäßen PM-Line-Start Motors,

Fig. 6:   ein Strukturschaltbild eines beschalteten erfindungsgemäßen PM-Line-Start Motors mit einem zusätzlichen Softstarter,

Fig. 7:   ein Schaltbild eines beschalteten PM-Line-Start Motors, dessen polumschaltbare Ständerwicklung eine Dahlanderwicklung ist,

Fig. 8:   ein stationäres M(n)-Diagramm eines Hochlaufvorgangs eines erfindungsgemäßen PM-Line-Start Motors mit übersynchroner Wicklungsumschaltung, und

Fig. 9:   ein Strukturschaltbild eines beschalteten erfindungsgemäßen PM-Line-Start Motors.

Fig. 1 wurde bereits im einleitenden Teil der Beschreibung näher erläutert und zeigt den Verlauf des Bremsmoments über der Motordrehzahl. Problematisch ist, dass das asynchrone Moment quadratisch mit einem Reduzieren der Spannung sinkt, das durch den PM-Läufer hervorgerufene Bremsmoment aber unverändert erhalten bleibt. Möchte man nun also ein Einschaltverfahren vorsehen, dass anfangs eine verminderte Spannung vorsieht, besteht die Gefahr, dass das Bremsmoment größer als das asynchrone Moment ist und einer Beschleunigung des Läufers entgegenwirkt.

Fig. 2 zeigt das schematische Schaltbild eines PM-Line-Start Motors mit Wicklungsumschaltung.

Man erkennt insgesamt drei Schalter, die als Schütze, in Form von Halbleiterschützen und/oder mechanischen Schützen, oder als Schaltglieder ausgestaltet sind. Schalter S1 und S2 speisen die Motorwicklung derart, dass sich für den PM-Line-Start Motor zwei Wicklungsstufen ergeben. Der dritte mit Netz bezeichnete Schalter trennt die gesamte Schaltung vom Drehstromnetz während der Umschaltphase und wenn der Antrieb nicht in Betrieb ist. Die erste mit dem Schalter S1 verbundene Wicklungsstufe ist für den asynchronen Hochlauf gedacht und so bemessen, dass sich praktisch kein generatorischer Bremssattel ausbilden kann. Nach dem asynchronen Hochlauf in der ersten Wicklungsstufe wird auf die zweite Wicklungsstufe umgeschaltet, die speziell für den synchronen Betrieb des Motors ausgelegt ist. Dabei sind sämtliche Schalter, nämlich S1 , S2 und "Netz" mit einer Ablaufsteuerung verbunden, die die Betätigung der einzelnen Schalter steuert.

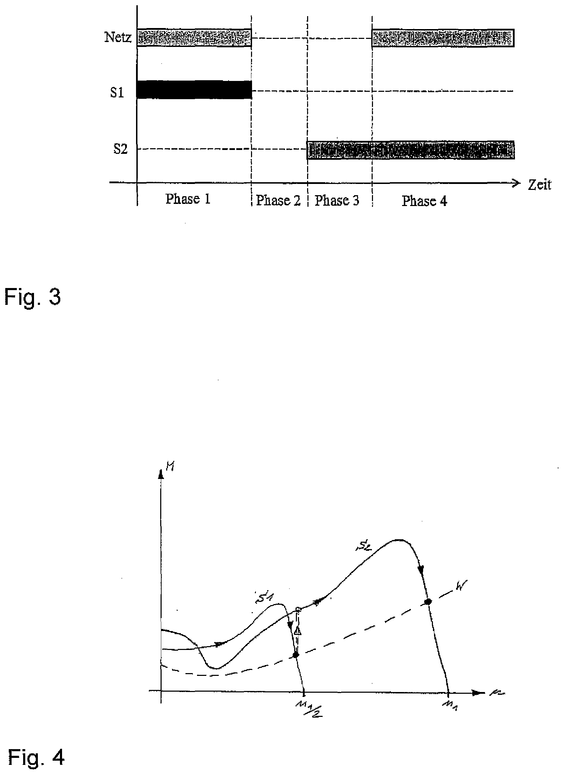

Fig. 3 zeigt den gesamten Einschalt- und Hochlaufvorgang, der im Wesentlichen in vier Schaltphasen unterteilt ist. Wie bereits obenstehend kurz erläutert sorgt die Ablaufsteuerung, beispielsweise in Form einer speicherprogrammierbaren Steuerung oder einer konventionellen Relaissteuerung, für die gewünschte Schaltfolge der Schalter. Die Unterdrückung des generatorischen Bremssattels, der sich typischerweise in Schaltphase 1 ausbildet, ist möglich, wenn die erste Wicklungsstufe der Ständerwicklung eine andere Polpaarzahl besitzt als der PM-Läufer. In der Phase 2 wird die Ständerwicklung vom Netz genommen. Dabei kann der Netzschalter oder der Schalter S1 gleichzeitig oder nacheinander in ihre jeweilige Offenstellung gebracht werden. In Phase 3 wird die Ständerwicklung mit S2 in die zweite Wicklungsstufe geschaltet, der Netzschalter jedoch noch in seiner offenen Stellung gehalten. Die zweite Wicklungsstufe weist nun die Polpaarzahl des PM-Läufers auf, um den synchronen Betrieb des PM-Line-Start Motors auszuführen. Um einen möglichst kleinen Einschalt-Stromstoß zu erzeugen, ist es sinnvoll, in der Phase 3 einen Vergleich von Netzspannung und induzierter Spannung auszuführen. Auch wenn beide Spannungen unterschiedliche Frequenzen aufweisen sollten, sollte ein Übergang zu Phase 4, in der der Netzschalter geschlossen wird, erst dann erfolgen, wenn die Phasenlage der beiden Spannungen zueinander möglichst günstig ist, d.h. wenn beide Drehspannungssysteme möglichst eine gleiche Phasenlage aufweisen.

In der Phase 4 ist demnach die zweite Wicklung über S2 mit der Netzspannung verbunden, hat also sozusagen den durch die erste Wicklung angelaufenen Rotor übernommen.

Fig. 4 zeigt diesen Hochlaufvorgang quasi-stationär im M(n)-Diagramm für den Fall dargestellt, dass sich die Polpaarzahlen der zwei Wicklungsstufen der Ständerwicklung im Verhältnis 2:1 verhalten. Hierbei gilt also, dass die Anlaufpolpaarzahl $p_1$ der ersten Wicklung doppelt so groß ist wie die Arbeitspolpaarzahl $p_2$ der zweiten Wicklung. Dabei erkennt man im Wesentlichen zwei Kurven, die über der Abszisse die Drehzahl des Motors und über die Ordinate das von dem Motor herrührende Drehmoment anzeigen. Die mit S1 bezeichnete Kurve entspricht dabei der Kennlinie der ersten Wicklungsstufe, die mit S2 bezeichnete Kurve der Kennlinie der zweiten Wicklungsstufe. Die in gestrichelter Form dargestellte und mit W bezeichnete Kurve ist dabei die Lastkennlinie.

Bei einem Einschaltverfahren des erfindungsgemäßen Motors mit Wicklungsumschaltung wird ausgehend von der Drehzahl 0 die Kennlinie S1 beschritten, bis bei dem mit einem Doppelstrich und einem transparenten nach oben deutenden Dreieck dargestellten Umschaltvorgang auf die Kennlinie der zweiten Wicklung gewechselt wird.

Dadurch wird der generatorische Bremssattel der Kennlinie S2 der zweiten Wicklungsstufe, die ja für den synchronen Betrieb des Motors ausgelegt ist, übergangen und erst in einem Bereich der Kennlinie genutzt, der keinen Bremssattel mehr aufweist.

Das beschriebene Einschaltverfahren mit der Wicklungsumschaltung ermöglicht nun zusätzlich ein Reduzieren der Spannung in der Einschalt- und Hochlaufphase ohne die Gefahr, dass der generatorische Bremssattel den Hochlaufvorgang, insbesondere einen Hochlaufvorgang mit verringerter Spannung, abwürgt.

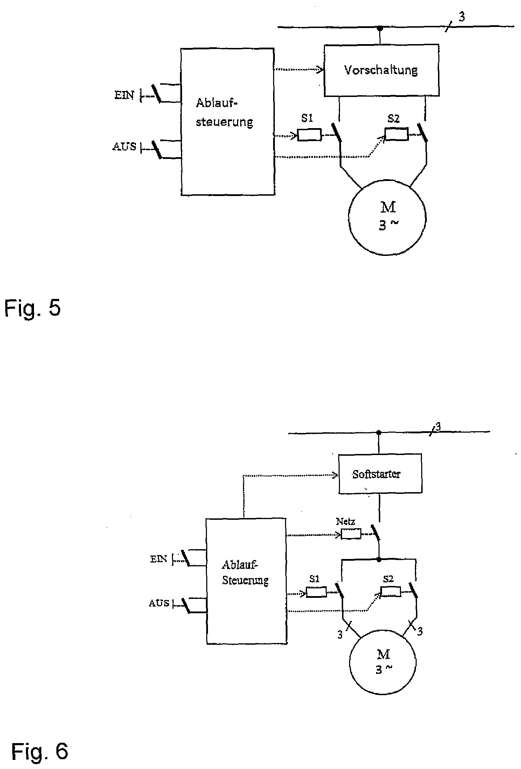

Fig. 5 zeigt eine andere Darstellung einer erfindungsgemäßen Ausführungsform, die anstelle eines Netzschalters eine durch die Ablaufsteuerung steuerbare Vorschaltung aufweist. Die Vorschaltung steht sowohl mit Schalter S1 als auch mit Schalter S2 in Verbindung. Genau wie die in Fig. 2 dargestellte Schaltung ist es das Ziel den in der Hochlaufphase auftretenden generatorischen Bremssattel im Einschaltverfahren zu unterbinden. Dazu wird während eines Hochlaufens auf die umschaltbare Ständerwicklung zurückgegriffen. Die erste Wicklungsstufe wird über Schalter S1 geschaltet und ist speziell für den asynchronen Hochlauf gedacht und so bemessen, dass sich kein generatorischer Bremssattel ausbilden kann. Zur Begrenzung des Einschaltstroms kann eine Spannungsreduzierende Vorschaltung zwischen Netz und Ständerwicklung angeordnet sein, wobei es sich hierbei im einfachsten Fall um Vorschaltimpedanzen oder um einen Softstarter handelt.

Wie bereits vorstehend erläutert wird nach dem asynchronen Hochlauf die erste Wicklungsstufe über Schalter S1 abgeschaltet und mit Schalter S2 die zweite und finale Wicklungsstufe eingeschaltet. Diese ist speziell für den synchronen Betrieb ausgelegt. Auch zur Begrenzung des Wiedereinschaltstroms beim Wechseln auf die zweite Wicklungsstufe kann die spannungsbegrenzende Vorschaltung zwischen Netz und Ständerwicklung genutzt werden.

Die Unterdrückung des generatorischen Bremssattels in der Anlaufphase ist möglich, wenn die Ständerwicklung in der ersten Wicklungsstufe eine Anlaufpolpaarzahl $p_1$ besitzt, die nicht mit der Polpaarzahl des PM-Läufers $p_3$ übereinstimmt. In der Anlaufphase arbeiten damit Ständerwicklung und Anlaufkäfig mit der Anlaufpolpaarzahl $p_1$ als reiner Asynchronmotor. Der PM-Läufer ist aufgrund der unterschiedlichen Polpaarzahlen entkoppelt. Nach dem Hochlauf wird auf die zweite Wicklungsstufe umgeschaltet, in der die Ständerwicklung nun die Arbeitspolpaarzahl $p_2$ des PM-Läufers $p_3$ aufweist. Demnach weist die Ständerwicklung der zweiten Wicklungsstufe die Polpaarzahl $p_2$ auf, die für den synchronen Betrieb des PM-Line-Start Motors vorgesehen ist. Um den generatorischen Bremssattel zu vermeiden ist die Ständerwicklung des PM-Line-Start Motors als polumschaltbare Drehfeldwicklung ausgeführt.

Grundsätzlich ist dabei eine Ausführungsform denkbar, die zwei getrennte Ständerwicklungen aufweist, die jeweils für unterschiedliche Polpaarzahlen ausgelegt sind.

Fig. 6 zeigt eine Variation der vorliegenden Erfindung mit einem Softstarter, der die Motorspannung und die Einschaltströme reduziert und nach einer Spannungs-Zeit-Rampe bis zur direkten Netzspannung steigert. Nach dem Hochlauf wird ein solcher Softstarter überbrückt.

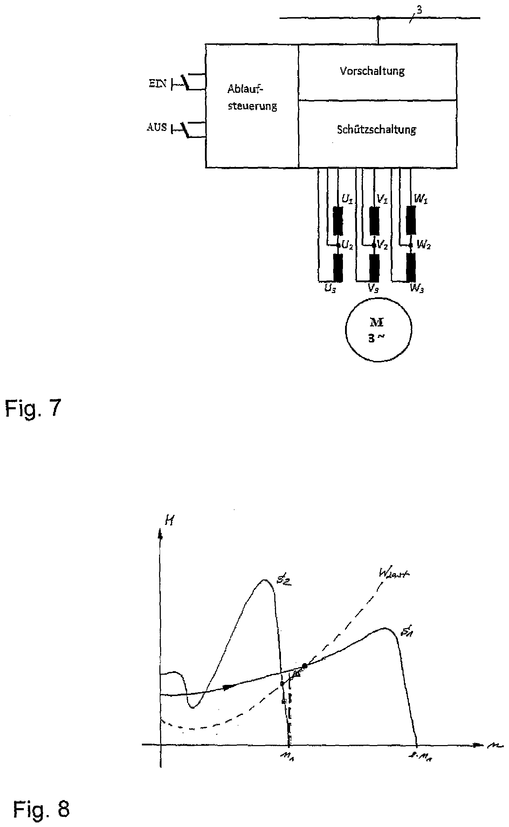

Fig. 7 zeigt die Beschaltung eines erfindungsgemäßen PM-Line-Start Motors, bei dem die Ständerwicklung in Form einer Dahlanderwicklung ausgeführt ist. Dies hat den Vorteil, dass eine bessere Aktivteilausnutzung gegeben ist.

Nach Fig. 7 besteht die Ständerwicklung aus zwei Teilwicklungen, deren ausgeführte Wicklungsenden $U_{1,2,3}$, $V_{1,2,3}$ und $W_{1,2,3}$ mittels einer Schützschaltung zu jeweils symmetrischen Drehstromschaltungen (Stern- oder Dreieckschaltungen, Doppel-Stern- oder Doppel-Dreieckschaltungen) verschaltet werden können. Fig. 7 zeigt ferner zur zusätzlichen Begrenzung des Einschalt- bzw. Wiedereinschaltstroms eine spannungsbegrenzende Vorschaltung zwischen Netz und Ständerwicklung. Diese ist jedoch optional.

Um bei der Umschaltung von der ersten Wicklungsstufe auf die zweite Wicklungsstufe einen möglichst kleinen Wiedereinschaltstromstoß zu erhalten, wird die Umschaltung, bezogen auf die synchrone Bemessungsdrehzahl $n_1 = f_{Netz}/p_2$ des PM-Line-Start Motors übersynchron ausgeführt. Diese Variante des Einschaltverfahrens ist somit nur möglich, wenn die Anlaufpolpaarzahl $p_1$ der ersten Wicklungsstufe kleiner als die Arbeitspolpaarzahl $p_2$ der zweiten Wicklungsstufe ist. Somit kann diese Variation des Einschaltverfahrens für PM-Line-Start Motoren mit Polpaarzahlen $p_2 \geq 2$ genutzt werden.

Fig. 8 zeigt einen Hochlaufvorgang im stationären M(n)-Diagramm, bei der die Kennlinie S1 die Kennlinie der ersten Wicklungsstufe, die Kennlinie S2 die Kennlinie der zweiten Wicklungsstufe und die gestrichelt ausgeführte Kennlinie die Lastkennlinie darstellt.

Nach Fig. 8 wird die Ständerwicklung zunächst in der ersten Wicklungsstufe direkt oder über eine optionale Vorschaltung an das Drehstromnetz geschaltet. Die Ständerwicklung ist bezüglich der ersten Wicklungsstufe so auszulegen, dass sich ein stationärer Arbeitspunkt mit der Lastkennlinie oberhalb der synchronen Bemessungsdrehzahl $n_1 = f_{Netz}/p_2$ ergibt. Im nächsten Schritt wird die Ständerwicklung vom Netz abgeschaltet und zunächst mittels der Ablaufsteuerung in die zweite Wicklungsstufe umgeschaltet. Nun hat die Ständerwicklung die Polpaarzahl des PM-Läufers und der PM-Läufer induziert in die Ständerwicklung eine Polradspannung mit der von der aktuellen Drehzahl abhängigen Frequenz $p_2 \cdot n$.

Da der Motor noch nicht an das Netz geschaltet ist, wird der Antrieb in Folge der Lastkennlinie abgebremst. Dies erkennt man an dem Abgleiten des Arbeitspunkts, der sich in dem Schnittpunkt der Kennlinie S1 und der Lastkennlinie $W_{Last}$ befindet und auf der Lastkennlinie $W_{Last}$ in Richtung kleinerer Drehzahlen bewegt.

Typischerweise ist es dann die Aufgabe der Ablaufsteuerung die Netzspannung und die induzierte Polradspannung im Sinne einer möglichst stoßfreien Netzaufschaltung zu überwachen. Wenn etwa Frequenzgleichheit besteht und die Differenz von Netzspannung und Polradspannung möglichst klein ist, wird die Ständerwicklung des PM-Line-Start Motors in der zweiten Wicklungsstufe direkt oder über eine Vorschaltung an das Drehstromnetz geschaltet. Der Arbeitspunkt geht also von der Kennlinie S1 der ersten Wicklung auf einen Bereich der Kennlinie S2 der zweiten Wicklung über ohne dass dabei der generatorische Bremssattel der Kennlinie S2 durchlaufen werden muss.

Wird in Fig. 8 von einem Kreiselpumpenantrieb ausgegangen und eine Ständerwicklung nach dem Dahlanderprinzip unterstellt, so kann die erste Wicklungsstufe in Dreieckschaltung und die zweite Wicklungsstufe in Doppelsternschaltung ausgeführt werden.

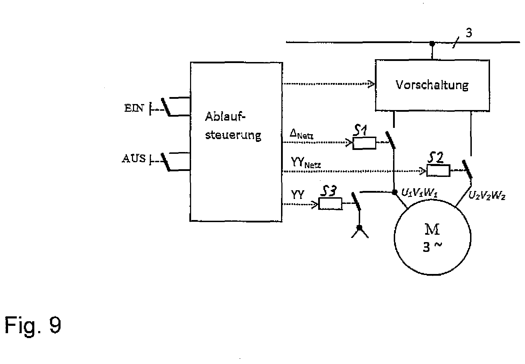

Fig. 9 zeigt hierfür die Schützschaltung für den Hauptstromkreis. Abgesehen von einer möglichen Vorschaltung zur zusätzlichen Reduzierung von Einschaltstrom und Wiedereinschaltstrom, die in der Fig. 8 optional dargestellt ist, werden für die Ausführung dieser Schaltungsvariante lediglich drei Hauptschütze benötigt.

Die Ablaufsteuerung, die beispielsweise durch eine SPS (speicherprogrammierbare Steuerung) umgesetzt sein kann, sorgt dann für die notwendige Schaltfolge des Einschaltverfahrens.

In einem ersten Schritt erfolgt das Einschalten der Ständerwicklung in der ersten Wicklungsstufe. Sollte eine Vorschaltung zur Begrenzung des Einschaltstroms notwendig sein, wird diese dann anschließend herausgeschaltet.

In einem daran anschließenden zweiten Schritt erfolgt die Abschaltung der asynchronen Hochlaufphase. Typischerweise erfolgt dies durch das Unterbrechen der Leistungszufuhr zur ersten Wicklungsstufe.

In einem dritten Schritt wird die Ständerwicklung von der ersten Wicklungsstufe auf die zweite Wicklungsstufe umgeschaltet. Die Schalter bzw. die Schütze S1 und S2 werden dafür entsprechend umgeschaltet. Für die zweite Wicklungsstufe wird der elektrische Sternpunkt durch den Schalter bzw. das Schütz S3 hergestellt.

Danach werden die Netzspannung und die induzierte Polradspannung überwacht, um eine möglichst stoßfreie Wiederzuschaltung zu ermöglichen.

Anschließend erfolgt dann die Zuschaltung zu einem günstigen Zeitpunkt. Dabei wird also die zweite Wicklungsstufe an die Netzspannung angeschlossen. Wenn eine Vorschaltung zur Dämpfung des Wiedereinschaltstroms oder des Einschaltstroms notwendig sein sollte, wird diese in einem anschließenden Schritt herausgeschaltet.

**Patentansprüche**

1. Permanentmagnet-Line-Start Motor, vorzugsweise mit einer Leistung von mindestens 5kW, umfassend:

   einen Läufer, und einen Ständer mit einer Ständerwicklung,
   wobei die Ständerwicklung als polumschaltbare Drehfeldwicklung ausgeführt ist, wobei die polumschaltbare Drehfeldwicklung eine erste Wicklungsstufe und eine zweite Wicklungsstufe umfasst, die getrennt voneinander betreibbar sind, und die erste Wicklungsstufe eine Anlaufpolpaarzahl $p_1$ besitzt, die ungleich einer Arbeitspolpaarzahl $p_2$ der zweiten Wicklungsstufe ist, und der Motor eine Ablaufsteuerung umfasst, die dazu ausgelegt ist, während eines Einschaltvorgangs des Motors eine gezielte Wicklungsumschaltung der polumschaltbaren Drehfeldwicklung vorzunehmen, wobei die gezielte Wicklungsumschaltung von der ersten Wicklungsstufe zum Hochlaufen des Motors auf die zweite Wicklungsstufe zum synchronen Betreiben des Motors erfolgt, **dadurch gekennzeichnet, dass** eine Vorschaltung zum Reduzieren einer Spannung zwischen einer Netzspannungsleitung und der Ständerwicklung angeordnet ist, um einen Einschaltstrom oder einen Wiedereinschaltstrom zu begrenzen.

2. Motor nach Anspruch 1, wobei die erste Wicklungsstufe zum asynchronen Hochlaufen des Motors dient, und die zweite Wicklungsstufe zum synchronen Betreiben des Motors dient.

3. Motor nach Anspruch 1 oder 2, wobei die Anlaufpolpaarzahl $p_1$ der ersten Wicklungsstufe nicht mit einer Polzahl $p_3$ des PM-Läufers übereinstimmt, und vorzugsweise die Arbeitspolpaarzahl $p_2$ der zweiten Wicklungsstufe gleich der Polzahl $p_3$ des PM-Läufers ist.

4. Motor nach einem der Ansprüche 1 bis 3, wobei die Anlaufpolpaarzahl $p_1$ der ersten Wicklungsstufe kleiner als die Arbeitspolpaarzahl $p_2$ der zweiten Wicklungsstufe ist.

5. Motor nach einem der vorstehenden Ansprüche, wobei die Ablaufsteuerung ferner dazu ausgelegt ist, zwischen dem Umschalten von der ersten Wicklungsstufe auf die zweite Wicklungsstufe eine Phase vorzusehen, in der weder die erste noch die zweite Wicklungsstufe mit Energie versorgt sind, wobei vorzugsweise der Zeitpunkt des Umschaltens auf die zweite Wicklungsstufe in Abhängigkeit von der Phasenlage einer Netzspannung erfolgt.

6. Motor nach einem der vorhergehenden Ansprüche, ferner umfassend einen ersten Schalter, der mit der ersten Wicklungsstufe verbunden ist, und einen zweiten Schalter, der mit der zweiten Wicklungsstufe verbunden ist, wobei der erste und der zweite Schalter durch die Ablaufsteuerung betätigbar sind.

7. Motor nach Anspruch 6, wobei die von den Wicklungen entfernten Enden des ersten und zweiten Schalters miteinander verbunden sind und über einen Netzschalter an eine Versorgungsleitung angeschlossen sind, wobei der Netzschalter durch die Ablaufsteuerung betätigbar ist.

8. Motor nach einem der vorhergehenden Ansprüche, wobei die Vorschaltung durch Vorschaltimpedanzen oder einen Softstarter verwirklicht ist.

9. Motor nach einem der vorhergehenden Ansprüche, wobei die Ständerwicklung in Form einer Dahlanderwicklung ausgeführt ist.

10. Motor nach einem der vorhergehenden Ansprüche 1 bis 8, wobei die Ständerwicklung zwei voneinander getrennte Wicklungen aufweist, die jeweils für unterschiedliche Polzahlen ausgelegt sind.

11. Motor nach einem der vorhergehenden Ansprüche 1 bis 10, wobei der Motor oder die Ablaufsteuerung dazu ausgelegt ist, eine Umschaltung bezogen auf die synchrone Bemessungsdrehzahl $n_1$ des PM-Line-Start Motors übersynchron auszuführen, und die Bemessungsdrehzahl $n_1$ ist:

$$n_1 = f_{Netz}/p_2,$$

wobei

$f_{Netz}$ die Netzfrequenz, und
$p_2$ die Arbeitspolpaarzahl der zweiten Wicklungsstufe ist.

12. Einschaltverfahren eines Permanentmagnet-Line-Start Motors, der die Merkmale eines der vorhergehenden Ansprüche aufweist, wobei das Verfahren die Schritte umfasst:

(i) Einschalten einer ersten Wicklungsstufe zum Starten einer asynchronen Hochlaufphase,
(ii) Abschalten der ersten Wicklungsstufe, um die asynchrone Hochlaufphase zu beenden, durch Trennung der Ständerwicklung vom Drehstromnetz und
(iii) Zuschalten einer zweiten Wicklungsstufe, die zum synchronen Betreiben des Motors ausgelegt ist,

wobei das Verfahren zwischen Schritt (ii) und (iii) ferner den Schritt umfasst:
(iv) Überwachen der Netzspannung und einer induzierten Polradspannung, um einen Umschaltzeitpunkt zu ermitteln, der eine möglichst stoßfreie Netzaufschaltung zulässt, wobei vorzugsweise ein Umschaltzeitpunkt dann eine möglichst stoßfreie Netzaufschaltung zulässt, wenn zwischen der Polradspannung und der Netzspannung etwa Frequenzgleichheit herrscht und die Differenz zwischen Netzspannung und Polradspannung klein ist, also einen vorbestimmten Schwellenwert unterschreitet.

## Claims

1. Permanent-magnet line-start motor, preferably having a power of at least 5 kW, comprising:

    a rotor, and a stator having a stator winding, wherein the stator winding is embodied as a changeable-pole rotating field winding, wherein the changeable-pole rotating field winding comprises a first winding stage and a second winding stage, which winding stages can be operated separately from one another, and the first winding stage has a number of start-up pole pairs $p_1$, which is not equal to a number of operating pole pairs $p_2$ of the second winding stage, and the motor comprises a sequence controller, which is designed to perform a targeted winding changeover of the changeable-pole rotating field winding during a switch-on process of the motor, wherein the targeted winding changeover takes place from the first winding stage for the run-up of the motor to the second winding stage for the synchronous operation of the motor, **characterized in that** a ballast circuit for reducing a voltage is arranged between a supply system voltage line and the stator winding in order to limit an inrush current or a restart current.

2. Motor according to Claim 1, wherein the first winding stage serves for the asynchronous run-up of the motor and the second winding stage serves for the synchronous operation of the motor.

3. Motor according to Claim 1 or 2, wherein the number of start-up pole pairs $p_1$ of the first winding stage does not correspond to a number of poles $p_3$ of the PM rotor and the number of operating pole pairs $p_2$ of the second winding stage is preferably equal to the number of poles $p_3$ of the PM rotor.

4. Motor according to any one of Claims 1 to 3, wherein the number of start-up pole pairs $p_1$ of the first winding stage is lower than the number of operating pole pairs $p_2$ of the second winding stage.

5. Motor according to any one of the preceding claims, wherein the sequence controller is further designed to provide a phase between the changeover from the first winding stage to the second winding stage, in which phase neither the first nor the second winding stage is supplied with power, wherein the time of the changeover to the second winding stage preferably takes place depending on the phasing of a supply system voltage.

6. Motor according to any one of the preceding claims, further comprising a first switch, which is connected to the first winding stage, and a second switch, which is connected to the second winding stage, wherein the first and the second switch can be actuated by the sequence controller.

7. Motor according to Claim 6, wherein the ends of the first and second switch that are remote from the windings are connected to one another and connected to a supply line by means of a power switch, wherein the power switch can be actuated by the sequence controller.

8. Motor according to any one of the preceding claims, wherein the ballast circuit is implemented by ballast impedances or a soft starter.

9. Motor according to any one of the preceding claims, wherein the stator winding is embodied in the form of a Dahlander winding.

10. Motor according to any one of preceding Claims 1 to 8, wherein the stator winding has two windings that are isolated from one another and that are each designed for different numbers of poles.

11. Motor according to any one of preceding Claims 1 to 10, wherein the motor or the sequence controller is designed to execute a changeover based on the synchronous rated rotational speed $n_1$ of the PM line-start motor in oversynchronous fashion and the rated rotational speed $n_1$ is:

$$n_1 = f_{supply\ system}/p_2,$$

, wherein

    $f_{supply\ system}$ is the supply system frequency, and $P_2$ is the number of operating pole pairs of the second winding stage.

12. Method for switching on a permanent-magnet line-start motor, which has the features of one of the preceding claims, wherein the method comprises the following steps:

    (i) switching on a first winding stage to start an asynchronous run-up phase,
    (ii) disconnecting the first winding stage in order to terminate the asynchronous run-up phase, by isolating the stator winding from the three-phase supply system and
    (iii) connecting a second winding stage, which is designed for the synchronous operation of the motor,

    wherein, between step (ii) and (iii), the method further comprises the following step:

(iv) monitoring the supply system voltage and an induced rotor voltage in order to determine a changeover time that permits the smoothest possible supply system connection, wherein a changeover time preferably permits the smoothest possible supply system connection when there is approximate frequency equality between the rotor voltage and the supply system voltage and the difference between the supply system voltage and the rotor voltage is small, that is to say undershoots a predetermined threshold value.

**Revendications**

1. Moteur à démarrage direct à aimant permanent, de préférence d'une puissance d'au moins 5 kW, comprenant :

un rotor et un stator pourvu d'un enroulement statorique,
dans lequel l'enroulement statorique est réalisé sous la forme d'un enroulement à champ tournant avec commutation de pôles, dans lequel l'enroulement à champ tournant avec commutation de pôles comprend un premier niveau d'enroulement et un deuxième niveau d'enroulement qui peuvent fonctionner séparément l'un de l'autre, et le premier niveau d'enroulement possède un nombre de paires de pôles de démarrage $p_1$ qui est différent d'un nombre de paires de pôles de travail $p_2$ du deuxième niveau d'enroulement, et le moteur comprend un dispositif de commande séquentielle qui est conçu pour procéder pendant un processus de mise sous tension du moteur à une commutation d'enroulement ciblée de l'enroulement à champ tournant avec commutation de pôles, dans lequel la commutation d'enroulement ciblée est effectuée du premier niveau d'enroulement pour la mise en régime du moteur au deuxième niveau d'enroulement pour le fonctionnement synchrone du moteur, **caractérisé en ce qu'**un ballast pour réduire une tension est disposé entre une ligne de tension secteur et l'enroulement statorique afin de limiter un courant de mise sous tension ou un courant de remise sous tension.

2. Moteur selon la revendication 1, dans lequel le premier niveau d'enroulement sert à la mise en régime asynchrone du moteur, et le deuxième niveau d'enroulement sert au fonctionnement synchrone du moteur.

3. Moteur selon la revendication 1 ou 2, dans lequel le nombre de paires de pôles de démarrage $p_1$ du premier niveau d'enroulement ne coïncide pas avec un nombre de pôles $p_3$ du rotor PM, et de préférence le nombre de paires de pôles de travail $p_2$ du deuxième niveau d'enroulement est égal au nombre de pôles $p_3$ du rotor PM.

4. Moteur selon l'une quelconque des revendications 1 à 3, dans lequel le nombre de paires de pôles de démarrage $p_1$ du premier niveau d'enroulement est inférieur au nombre de paires de pôles de travail $p_2$ du deuxième niveau d'enroulement.

5. Moteur selon l'une quelconque des revendications précédentes, dans lequel le dispositif de commande séquentielle est en outre conçu pour prévoir entre la commutation du premier niveau d'enroulement au deuxième niveau d'enroulement une phase dans laquelle ni le premier ni le deuxième niveau d'enroulement ne sont alimentés en énergie, dans lequel de préférence l'instant de la commutation sur le deuxième niveau d'enroulement a lieu en fonction de la position de phase d'une tension secteur.

6. Moteur selon l'une quelconque des revendications précédentes, comprenant en outre un premier commutateur qui est relié au premier niveau d'enroulement, et un deuxième commutateur qui est relié au deuxième niveau d'enroulement, dans lequel le premier et le deuxième commutateurs peuvent être actionnés par le dispositif de commande séquentielle.

7. Moteur selon la revendication 6, dans lequel les extrémités éloignées des enroulements du premier et du deuxième commutateur sont reliées ensemble et sont connectées à une ligne d'alimentation par l'intermédiaire d'un interrupteur secteur, l'interrupteur secteur pouvant être actionné par le dispositif de commande séquentielle.

8. Moteur selon l'une quelconque des revendications précédentes, dans lequel le ballast est réalisé par des impédances de ballast ou un démarreur progressif.

9. Moteur selon l'une quelconque des revendications précédentes, dans lequel l'enroulement statorique est réalisé sous la forme d'un enroulement Dahlander.

10. Moteur selon l'une quelconque des revendications précédentes 1 à 8, dans lequel l'enroulement statorique présente deux enroulements séparés l'un de l'autre qui sont conçus respectivement pour différents nombres de pôles.

11. Moteur selon l'une quelconque des revendications précédentes 1 à 10, dans lequel le moteur ou le dispositif de commande séquentielle est conçu pour effectuer de manière hypersynchrone une commutation par rapport à la vitesse de rotation nominale synchrone $n_1$ du moteur à démarrage direct à aimant permanent, et la vitesse de rotation nominale $n_1$ est égale à :

$$n_1 = f_{Netz}/p_2,$$

où

$f_{Netz}$ est la fréquence secteur, et
$P_2$ est le nombre de paires de pôles de travail du deuxième niveau d'enroulement.

12. Procédé de mise sous tension d'un moteur à démarrage direct à aimant permanent qui présente les particularités d'une des revendications précédentes, le procédé comprenant les étapes consistant à :

(i) mettre sous tension un premier niveau d'enroulement pour démarrer une phase de mise en régime asynchrone,
(ii) mettre hors tension le premier niveau d'enroulement pour terminer la phase de mise en régime asynchrone en déconnectant l'enroulement statorique du réseau triphasé, et
(iii) mettre en circuit un deuxième niveau d'enroulement qui est conçu pour le fonctionnement synchrone du moteur,

dans lequel le procédé comprend entre les étapes (ii) et (iii) en outre l'étape consistant à :
(iv) surveiller la tension secteur et une tension de roue polaire induite pour établir un instant de commutation qui autorise une mise en service du réseau avec un minimum d'à-coups, dans lequel de préférence un instant de commutation autorise alors une mise en service du réseau avec un minimum d'à-coups s'il existe approximativement une égalité de fréquence entre la tension de roue polaire et la tension secteur et la différence entre la tension secteur et la tension de roue polaire est faible, donc inférieure à une valeur seuil prédéterminée.

**Fig. 1**

**Fig. 2**

Fig. 3

Fig. 4

Fig. 5

Fig. 6

Fig. 7

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5859513 A

- CH 435435 A

**In der Beschreibung aufgeführte Nicht-Patentliteratur**

- **ALIAKBAR DAMAKI ALIABAD et al.** Line-Start Permanent-Magnet Motors: Significant Improvements in Starting Torque, Synchronization, and Steady-State Performance. *IEEE TRANSACTION ON MAGNETICS, IEEE SERVICE CENTER, NEW YORK, NY, US*, 01 December 2010, vol. 46 (12), 4066-4072

- **ALIABAD A D et al.** Analytic modelling and dynamic analysis of pole-changing line-start permanent-magnet motors. *IET ELECTRIC POWER APPLICATION, IET, UK*, 08 March 2012, vol. 6 (3), 149-155